# EUROPÄISCHE PATENTANMELDUNG

(11) **EP 1 116 631 A2**
(43) Veröffentlichungstag der Anmeldung: **18.07.2001**
(21) Anmeldenummer: 00127912.4
(22) Anmeldetag: 20.12.2000
(51) Int. Cl.: B60R 16/02

(54) **Elektronische Steuervorrichtung für einen Motor in einem Kraftfahrzeug**

(30) Priorität: 21.09.2000 DE 10047089; 17.01.2000 DE 10001789
(71) Anmelder: Volkswagen Aktiengesellschaft, 38436 Wolfsburg (DE)
(72) Erfinder: Ristau, Olaf, 38159 Vechelde (DE); Marten, Thomas, 38446 Wolfsburg (DE); Müller, Uwe, 38547 Calberlah (DE)

(57) **Zusammenfassung**

Ein Kraftfahrzeug wie insbesondere ein Pkw enthält im allgemeinen ein sogenanntes Motorsteuergerät für die Ermittlung und Steuerung von Betriebsparametern des Motors und eine Zentralelektronik zur Steuerung der übrigen elektrischen Bausteine des Fahrzeugs. Zwischen dem Motorsteuergerät und der Zentralelektronik erfolgt ein bidirektionaler Datenaustausch. Zu diesem Zweck sind das Motorsteuergerät und die Steuerelektronik über einen Kabelbaum miteinander verbunden. Ein Kabelbaum bildet eine Quelle von Störmöglichkeiten, insbesondere aufgrund von Erschütterungen durch die Beschleunigungen des Fahrzeugs.

Aufgabe ist es, die Mittel für den Datenaustausch zwischen dem Motorsteuergerät und der Zentralelektronik zu vereinfachen und die Gefahr von Störungen zu verringern.

Zur Lösung dieser Aufgabe sind die Zentralelektronik (1) und das Motorsteuergerät (3) über eine gedruckte Leiterplatte (2) miteinander verbunden. Alternativ ist das Motorsteuergerät (3) vollständig in die Zentralelektronik (1) integriert. Dadurch wird der bisher angewendete Kabelbaum nicht mehr benötigt. Zur Verteilung von Betriebsspannungen oder Betriebsströmen von einem Zentralpunkt an verschiedene Verbraucher ist eine Vielzahl von zur Aufnahme von Bauteilen vorgesehenen Kontakten durch Öffnungen einer Oberschale hindurchgesteckt, und diese Einheit ist als Ganzes in eine darunter angeordnete Schaltungsplatine eingepreßt.

## Beschreibung

Die Erfindung geht aus von einer elektronischen Steuervorrichtung für einen Motor in einem Kraftfahrzeug gemäß dem Oberbegriff des Anspruchs 1.

Ein derartiges Kraftfahrzeug, vorzugsweise ein Personenkraftwagen, enthält im allgemeinen ein sogenanntes Motorsteuergerät. Dem Motorsteuergerät werden insbesondere Werte über Betriebsparameter des Motors zugeführt, zum Beispiel über die jeweilige Kolbenstellung, die Ventilstellung, den Zündzeitpunkt, die Temperatur an verschiedenen Punkten des Motors usw. Diese Meßwerte werden in dem Motorsteuergerät verarbeitet und erzeugen dadurch Steuerbefehle, die im Motor den Meßwerten entsprechende Einstell- oder Korrekturmaßnahmen durchführen.

Ein derartiges Kraftfahrzeug enthält außerdem eine sogenannte Zentralelektronik, die im wesentlichen alle elektrischen Funktionen des Kraftfahrzeugs steuert. Das sind zum Beispiel die Türverriegelung, eine Diebstahlsicherung, die Beleuchtung, Fahrtrichtungsanzeiger, Anzeigen für verschiedene Betriebszustände und dergl. Eine derartige Zentralelektronik enthält in der Regel eine Vielzahl von Prozessoren, Relais und ähnlichen Bauteilen.

Für den Gesamtbetrieb des Fahrzeugs müssen auch das Motorsteuergerät und die Zentralelektronik Daten in beiden Richtungen miteinander austauschen. Hierzu ist es bekannt, jeweils das Motorsteuergerät und die Zentralelektronik über einen Kabelbaum miteinander zu verbinden. Der Kabelbaum kann elektrische Leiter und auch Lichtleiter enthalten. Ein derartiger Kabelbaum ist ein relativ sperriges und schwer handhabbares Bauteil. Insbesondere besteht die Gefahr von Kontaktunterbrechungen oder Leiterbrüchen durch Schüttelbewegungen oder Schwingungen des Kabelbaums aufgrund der ständigen negativen und positiven Beschleunigungen des Fahrzeugs.

Der Erfindung liegt die Aufgabe zugrunde, die Mittel für den Datenaustausch zwischen dem Motorsteuergerät und der Zentralelektronik zu vereinfachen und die Gefahr der genannten Störungen durch die ständigen Beschleunigungen des Fahrzeugs zu verringern.

Diese Aufgabe wird durch die im Anspruch 1 angegebene Erfindung gelöst. Vorteilhafte Ausführungsformen und Weiterbildungen der Erfindung sind in den Unteransprüchen angegeben.

Bei der erfindungsgemäßen Lösung wird somit im Gegensatz zum Stand der Technik kein Kabelbaum benötigt. Durch den dadurch bewirkten Wegfall von Drähten ist die gesamte Anordnung für die elektrische Verbindung zwischen dem Motorsteuergerät und der Zentralelektronik wesentlich weniger anfällig gegen jegliche Art von Störungen durch Rüttelbewegungen und Schwingungen aufgrund von Beschleunigungen des Fahrzeugs. Auch ist die Herstellung der elektrischen Verbindung zwischen dem Motorsteuergerät und der Zentralelektronik bei der Fertigung wesentlich einfacher als bei einem Kabelbaum, der meist manuell angebracht und befestigt werden muß. Die Erfindung ist insbesondere auf dem Marinebereich in Wasserfahrzeugen vorteilhaft anwendbar, kann aber grundsätzlich bei jeder Art von Fahrzeugen angewendet werden.

Bei einer ersten Variante der Erfindung sind das Motorsteuergerät und die Zentralelektronik über eine gedruckte Leiterplatte miteinander verbunden, die den bisher benötigten Kabelbaum ersetzt. Die Leiterplatte stellt dabei ein von dem Motorsteuergerät und der Zentralelektronik mechanisch getrenntes Teil dar, das lediglich in die beiden Bausteine eingesteckt wird und die notwendige elektrische Verbindung zwischen diesen Teilen herstellt. Bei einer zweiten Variante der Erfindung ist das Motorsteuergerät vollständig in die Zentralelektronik integriert, also gewissermaßen in diese eingebunden und bildet einen integrierten Bestandteil der Zentralelektronik. Dann wird die getrennte Leiterplatte nicht benötigt, oder sie ist auch ein fester Bestandteil der Zentralelektronik.

Bei einer Ausführungsform der Erfindung ist die Leiterplatte beidseitig mit Leitern bedruckt. Dadurch werden eine bessere Raumausnutzung und eine Unterbringung einer größeren Zahl von Leiterzügen bei vorgegebenen Abmessungen der Bausteine ermöglicht.

Gemäß einer anderen Ausführungsform der Erfindung enthält die Leiterplatte zusätzlich Leiterbrücken für eines oder beide der durch die Leiterplatte miteinander verbundenen Bauteile. Derartige Leiterbrücken sind bei einer gedruckten Leiterplatte wesentlich einfacher herstellbar als in einem Kabelbaum. Bei einer weiteren Ausführungsform der Erfindung enthält die gedruckte Leiterplatte zusätzlich optische oder akustische Anzeigemittel für Betriebsparameter des Fahrzeugs oder für Alarmfunktionen. Diese Mittel können auch bei der zweiten Variante der Erfindung direkt auf einer Außenfläche der Zentralelektronik angeordnet sein.

Eine Weiterbildung der Erfindung betrifft eine Baueinheit zur Verteilung von Betriebsspannungen oder Betriebssrömen von einem Zentralpunkt an verschiedene Verbraucher in einem Kraftfahrzeug, die unter anderem die Aufgaben der genannten gedruckten Leiterplatte zwischen der Zentralelektronik und dem Motorsteuergerät übernehmen kann. Dabei ist eine Vielzahl von zur Aufnahme von Bauteilen vorgesehenen Kontakten durch Öffnungen einer Oberschale hindurchgesteckt, und diese Einheit ist als Ganzes in eine darunter angeordnete Schaltungsplatine eingepreßt. Dabei ist unterhalb der Schaltungsplatine eine Unterschale angeordnet, auf dessen Unterseite insbesondere große und wenig störanfällige Bauteile wie ein zylindrischer Kondensator angeordnet sind. Durch diese Lösung ergibt sich eine kompakte Einheit zur Zuführung von Betriebsspannungen oder Betriebsströmen zu den aktiven und passiven Bauteilen einer Baueinheit, wie zum Beispiel Relais, Steuerschaltungen und Sicherungen.

Gemäß einer Ausführung dieser Weiterbildung sind zur Übertragung von verschiedenen Betriebsspannungen oder Speiseströmen von Kabelanschlüssen an der Oberschale der Platine spezielle Bolzen vorgesehen, die an einem Ende einen in eine Öffnung der Oberschale eingreifenden Gewindezapfen und am anderen Ende ein gegenüber dem Gewinde größeren Fuß aufweisen, der auf Leiterzügen der Schaltungsplatine aufliegt. Durch diese Lösung ist es möglich, auch hohe Ströme in der Größenordnung von 100 Ampere bestimmten Leiterzügen und Stromschinen auf der Schaltungsplatine zuzuführen.

Vorzugsweise enthält dabei der Fuß des Bolzens auf seiner Unterseite eine Vielzahl von getrennten, auf den Leiterzügen aufliegenden Zapfen, die je einen Teil des insgesamt in den Bolzen hineinfließenden Stromes übernehmen. Für die Stromzuführung zu dem Bolzen sind an die durch die Öffnungen in der Oberschale hindurchragenden Gewindezapfen Betriebsspannungen führende Leitungen mittels eines Kabelschuhs und einer Mutter angeschlossen.

Dabei sind vorzugsweise die Öffnungen in der Oberschale für die Gewindezapfen der Bolzen mit mechanischen Kodierungen versehen, die nur das Aufsetzen des jeweils richtigen Kabelschuhs auf einen Gewindezapfen ermöglichen und eine Vertauschung der Kabelschuhe zwischen den Gewindezapfen verhindern. Derartige Kodierungen sind zum Beispiel durch unterschiedlich verlaufende Erhebungen oder Kanten an der Oberschale im Umgebungsbereich der Öffnungen gebildet, an die jeweils der Kabelschuh angepaßt ist.

Bei einer Ausführungsform besteht der Gewindezapfen des Bolzens aus Stahl und ist in den aus Messing bestehenden Fuß eingepreßt. Messing allein hat ein relativ niedriges Drehmomentverhalten und reißt in der Regel bei 10 N x m ab, während durch die genannte zweiteilige Ausführung des Bolzens aus Messing und Stahl ein Drehmoment bis zu 20 N x m erreicht wird.

Vorzugsweise ist die Unterschale an ihrer Kante mit Bohrungen zur Verschraubung der Baueinheit in einer Box, einem Bauraum oder einem sonstigen Umfeld versehen. Die Bohrungen enthalten dabei Einführschrägen zur Erleichterung des Einsetzens in die richtige Position in dem Bauraum.

Bei einer weiteren Auführungsform ist eine der Schalen, vorzugsweise die Unterschale, zur Halterung eines größeren Bauteils wie eines Kondensators mit mehreren, über den Umfang des Bauteils verteilten, senkrecht zur Schalenebene gerichteten, radial zum Bauteil federnden Armen versehen, die mit hakenförmigen Enden die Oberkante des Bauteils umgreifen. Dabei sind im Bereich des Bauteils an der Oberfläche der Schale mehrere, über den Umfang des Bauteils verteilte, radial zum Bauteil federnde Finger vorgesehen, die zum Toleranzausgleich in Axialrichtung und in Radialrichtung des Bauteils je auf das Bauteil eine radiale Kraft und eine axiale Kraft ausüben, die das Bauteil gegen die hakenförmigen Enden der federnden Arme drückt. Durch diese Lösung wird ein Toleranzausgleich bei der Halterung des Bauteils sowohl in Axialrichtung, also senkrecht zur Schalenebene, als auch in Radialrichtung erreicht. Dabei sind vorzugsweise an der Schale zusätzlich mehrere, über den Umfang des Bauteils verteilte starre Widerlager oder Anschläge vorgesehen, die die Radialbewegung und die Axialbewegung des Bauteils beim Einsetzen zwischen den federnden Armen begrenzen.

Bei einer weiteren Ausführungsform enthält die Unterschale zwei Löcher, durch die ein in sich schließbares, gürtelähnliches Teil hindurchgeführt ist, das von der Oberseite der Unterschale als Greifelement zum manuellen Einsetzen, Positionieren und Herausziehen der Unterschale in eine bzw. aus einer Aufnahme dient. Vorzugsweise ist das gürtelähnliche Teil durch einen handelsüblichen Kabelbinder gebildet. An der Unterseite der Unterschale ist zwischen den beiden Löchern ein aus der Schalenebene hervorragender Ring oder Halbring angeformt, der das gürtelähnliche Teil umgibt und ein Herunterfallen dieses Teils durch die Unterschale in die Aufnahme für das Bauteil verhindert. Durch diese Lösung wird auf einfache Weise eine manuelle Greifmöglichkeit an der Unterschale gebildet, die im allgemeinen eng an einem wannenförmigen Teil anliegt und sonst manuell nicht positioniert oder herausgenommen werden könnte. Die Anwendung eines handelsüblichen Kabelbinders als das gürtelähnliche Teil stellt eine besonders preiswerte Lösung dar, da derartige Kabelbinder handelsüblich und entsprechend preiswert sind.

Bei einer weiteren Ausführungsform ist die Unterschale am Rand mit mehreren beabstandeten Führungsstegen versehen, die Kabel vom Rand fernhalten und ein Einklemmen eines unterhalb der Unterschale liegenden Kabels zwischen der Unterschale und einer Kante einer die Unterschale aufnehmenden Aufnahme verhindern.

Die Erfindung wird im folgenden anhand der Zeichnung erläutert. Darin zeigen
- Figur 1: den grundsätzlichen Aufbau einer Steuervorrichtung gemäß der ersten Variante der Erfindung,
- Figur 2: den Aufbau einer Zentralelektronik mit Motorsteuergerät gemäß der zweiten Variante der Erfindung,
- Figur 3: eine perspektivische Darstellung der Ausführungsform gemäß Figur 2,
- Figur 4: eine Ausführungsform der Steuervorrichtung mit Anzeigemitteln,
- Figur 5: den grundsätzlichen Aufbau einer Baueinheit gemäß der genannten Weiterbildung der Erfindung,
- Figur 6: die Oberschale von Figur 5 allein,
- Figur 7: die in Figur 6 dargestellte Oberschale von unten,
- Figur 8: eine weitere Draufsicht auf die Oberschale gemäß Figur 6 mit einer besonderen konstruktiven Ausführung,
- Figur 9: eine Ansicht der in Figur 5 dargestellten Unterschale,
- Figur 10: einen speziellen Bolzen für die Stromzuführung zu den Leiterzügen auf der Schaltungsplatine,
- Figur 11: die fertige Baueinheit aus Oberschale, Schaltungsplatine, Unterschale und Bauteilen,
- Figur 12: das komplette Bauteil von Figur 11 von unten,
- Figur 13: eine spezielle Halterung eines Kondensators in der Anordnung gemäß Figur 11, 12 und
- Figur 14: die Anordnung gemäß Figur 13 ohne den Kondensator.

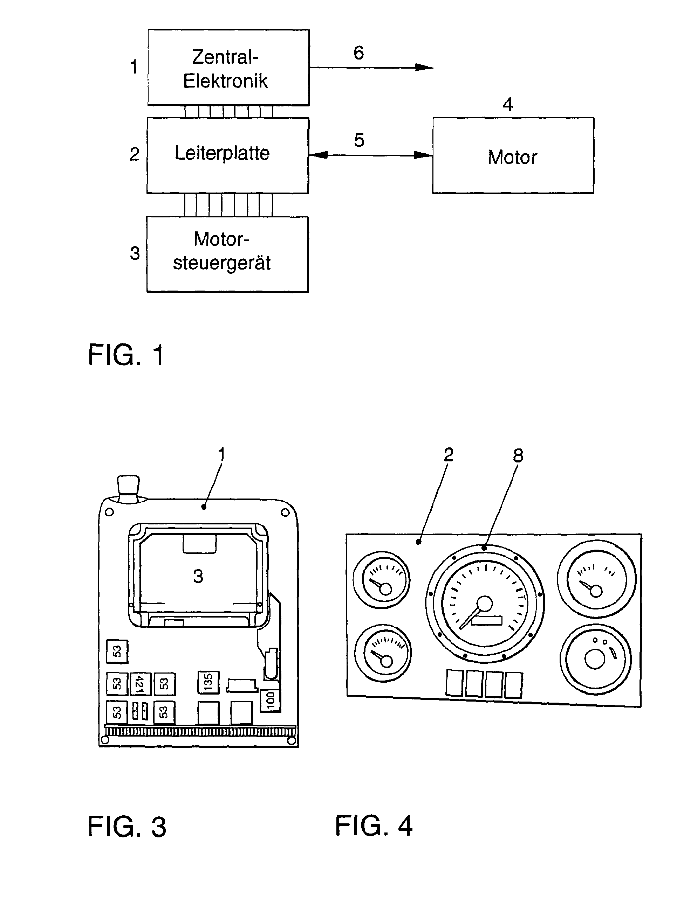

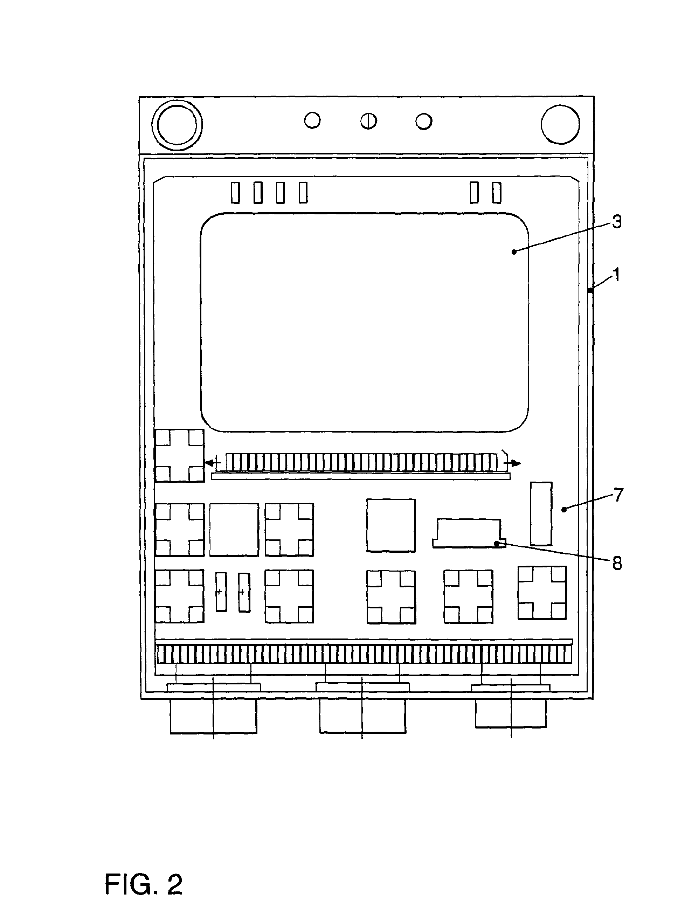

Figur 1 zeigt eine Zentralelektronik 1, ein Motorsteuergerät 3 und einen Motor 4. Für den notwendigen bidirektionalen Datenaustausch zwischen der Zentralelektronik 1 und dem Motorsteuergerät 3 sind diese beiden Bausteine über eine gedruckte Leiterplatte 2 miteinander verbunden, die mit gegenüberliegenden Seiten jeweils in die Zentralelektronik 1 und in das Motorsteuergerät 3 eingesteckt ist. Die Leiterplatte 2 ist über den bidirektionalen Datenbus 5 mit dem Motor 4 zum Austausch der Daten in der beschriebenen Weise verbunden. Statt des Datenbus 5 kann auch ein übliches Leiterbündel, zum Beispiel in Form eines Kabelbaums oder von Flachleitungen, vorgesehen sein. Die Zentralelektronik 1 versorgt über den Datenbus 6 alle übrigen elektrisch betriebenen Bausteine innerhalb des Kraftfahrzeugs.

In Figur 2 ist das Motorsteuergerät 3 in Form eines sogenannten EDC (Elektronic Diesel Control)-Steuergerätes unmittelbar in die Zentralelektronik 1 integriert, zum Beispiel auf einer Leiterplatte 7 der Zentralelektronik 1 angeordnet. Die Leiterplatte 7 enthält im unteren Teil unterhalb des Motorsteuergeräts 3 Bauteile J7, J2, D1, J16, S3, J17, S4, S1, J6, J9, J10, J5, die im wesentlichen Relais, Prozessoren und sonstige diskrete Bauteile darstellen. Außerdem enthält die Leiterplatte 7 einen Anschluß 8 für ein Diagnosegerät. Es ist ersichtlich, daß auch bei dieser Ausführungsform der bisher benötigte Kabelbaum für den bidirektionalen Datenaustausch zwischen dem Motorsteuergerät 3 und dem übrigen Teil der Zentralelektronik 1 nicht mehr benötigt wird.

Figur 3 zeigt eine perspektivische Darstellung einer Ausführungsform der Zentralelektronik 1 mit dem Motorsteuergerät 3 gemäß Figur 2. Im oberen Teil der Figur 3 ist wieder das Motorsteuergerät 3 dargestellt, während im unteren Teil die Bauteile von Figur 2 dargestellt sind.

In Figur 4 sind auf der Leiterplatte 2 zusätzlich fünf Instrumente 8 zur Anzeige verschiedener Betriebsparameter wie Motordrehzahl, Betriebsspannungen, Temperaturen, Öldruck und dergl. sowie Einstellmittel angeordnet. Die Ausführung gemäß Figur 4 ist auch bei der Anordnung von Figur 2 anwendbar. Instrumente 8 würden sich dann auf einer Oberfläche der Zentralelektronik 1 befinden.

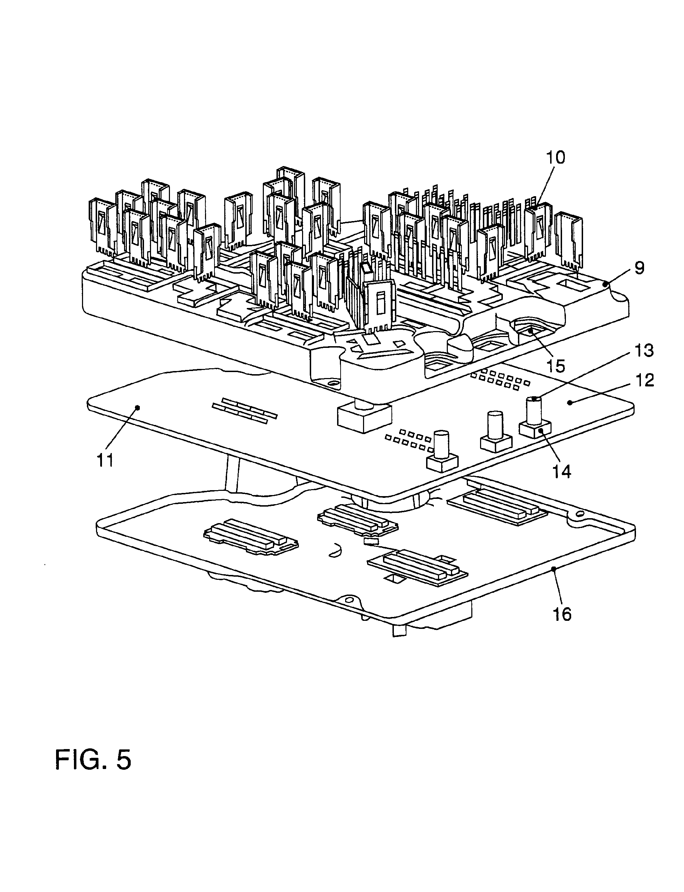

Figur 5 zeigt eine Oberschale 9 mit einer Vielzahl von Öffnungen. In die Öffnungen ist eine Vielzahl von Kontakten 10 von oben eingesteckt. Die Kontakte 10 liegen dabei zunächst locker mit Spiel, also "schwimmend" in den Öffnungen und ragen aus der Oberseite der Oberschale 9 hervor. Diese gesamte Einheit aus Oberschale 9 und Kontakten 10 wird dann in eine darunter angeordnete Schaltungsplatine 11 mit einer Vielzahl von Leiterzügen oder Stromschinen eingepreßt, wodurch sich eine starre Einheit aus Oberschale 9 und Schaltungsplatine 11 ergibt. Dabei greifen die unteren Enden der Kontakte 10 in eine Vielzahl von Löchern der Schaltungsplatine 14 ein, von denen nur einige dargestellt sind. Nach dem Einpressen der Kontakte 10 in die Schaltungsplatine 11 ragen die Kontakte 10 nicht mehr aus der Oberseite der Oberschale 9 hervor, sondern schließen mit dieser ab. In die Kontakte 10 wird dann eine Vielzahl von Bauteilen wie Relais, Steuerschaltungen und Sicherungen von oben eingesteckt. Auf der Schaltungsplatine 11 sind mehrere elektrisch leitende Bolzen 12 angeordnet, die je aus einem Gewindeschaft 13 mit einem Gewinde M6 oder M8 und aus einem gegenüber dem Gewinde größeren Fuß 14 bestehen. Der Fuß 14 liegt mit seiner Unterseite elektrisch leitend auf Leiterzügen oder Stromschienen der Schaltungsplatine 11 auf. Der Gewindeschaft 13 greift in Öffnungen 15 der Oberschale 9 ein. An dem zur Oberseite der Oberschale 9 hindurchragenden Ende des Gewindeschafts 13 wird mittels eines Kabelschuhs und einer Mutter ein nicht dargestelltes Stromzuführungskabel befestigt, über das ein bestimmter Strom den Leiterzügen oder Stromschienen auf der Schaltungsplatine 11 zugeführt wird. Das Stromzuführungskabel kommt von einem nicht dargestellten Kabelbaum, der mit einer Stromversorgungsschaltung verbunden ist. Unterhalb der Schaltungsplatine 11 ist eine Unterschale 16 angeordnet, auf deren Unterseite ein großer Kondensator hängend befestigt ist. Die drei Bauteile 9, 11 und 16 werden an mehreren Befestigungspunkten durch mehrere alle diese Teile durchdringende Schrauben zu einer Baueinheit zusammengehalten.

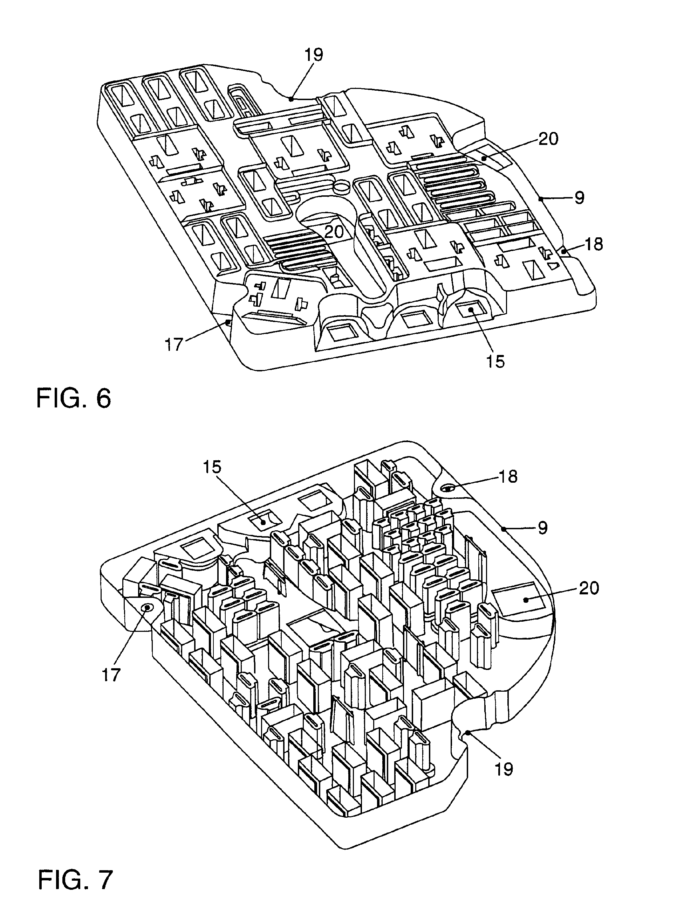

Figur 6 zeigt eine Draufsicht auf die Oberschale 9 ohne die eingesteckten Kontakte 10. .Für die Befestigung zwischen der Oberschale 9 und der Unterschale 16 gibt es drei Befestigungspunkte. Zwei Befestigungspunkte sind durch Bohrungen 17 und 18 in den beiden Schalen gebildet, während ein dritter Befestigungspunkt an der Aussparung 19 durch eine die Teile umgreifende Klammer gebildet ist. Zusätzlich zu den Öffnungen 15 für Bolzen mit einem Gewindeschaft M6 sind noch zwei größere Öffnungen 20 für den Durchtritt von Bolzen mit Gewindezapfen mit M8 vorgesehen, die ebenfalls Betriebsströme von angeschlossenen Kabeln den Leiterzügen oder Stromschienen auf der Schaltungsplatine 11 zuführen.

Figur 7 zeigt die Oberschale 9 gemäß Figur 6 von unten. Erkennbar sind die zwei Befestigungspunkte bildenden Bohrungen 17, 18 und die den dritten Befestigungspunkt bildende halbkreisförmige Aussparung 19.

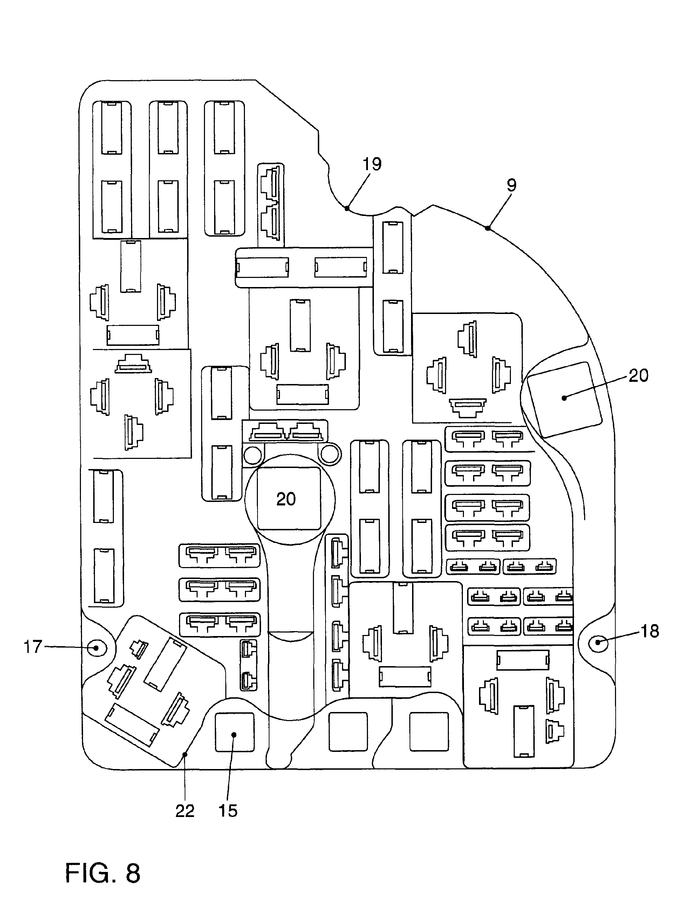

Figur 8 zeigt eine weitere Draufsicht auf die Oberschale 9 mit folgender Besonderheit: Die Oberseite der Oberschale 9 enthält im Bereich der Öffnungen 15 eine mechanische Kodierung, die eine Verwechselung der Kabelschuhe, die auf die durch die Öffnungen 15 hindurchragenden Gewindeschäfte 13 aufgesetzt werden, verhindern. Die Kodierung besteht aus einer durchlaufenden Kante oder Erhebung 22, die bei den drei Öffnungen 15 einen unterschiedlichen Verlauf aufweist, wie im unteren Teil der Figur 8 zu erkennen ist. Die Kabelschuhe sind der unterschiedlichen Form der Kante an den drei Öffnungen 15 angepaßt und können dadurch nicht vertauscht werden.

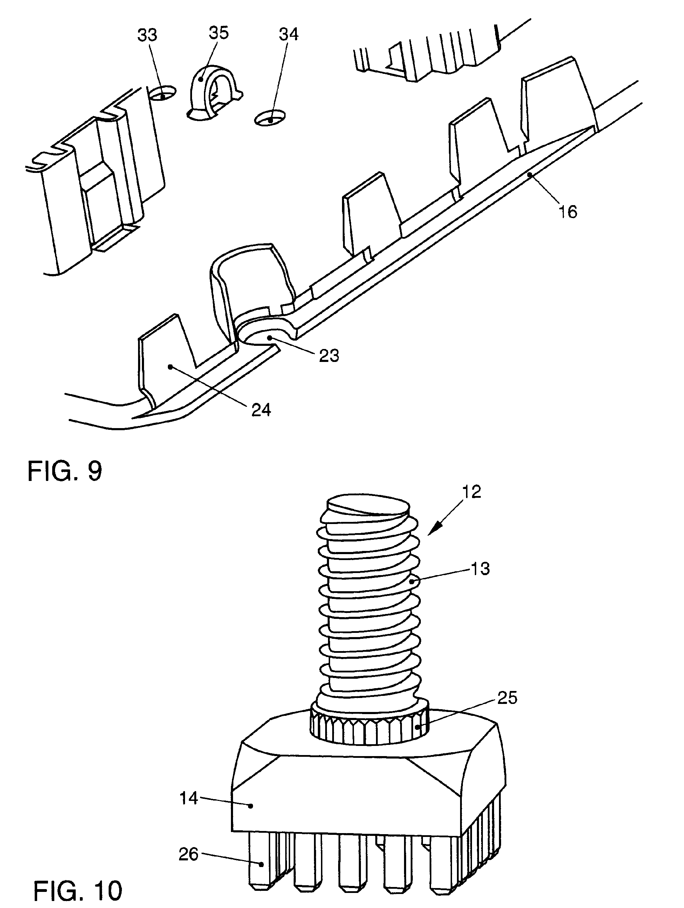

Figur 9 zeigt eine Ausführung der Unterschale 16, und zwar in einer Ansicht von unten der Schale. Die Unterschale 16 enthält an ihrem Rand Bohrungen 23, die zum Verschrauben der gesamten Einheit an einer Box, einem Bauraum oder einem Umfeld dienen. Die Bohrungen 23 sind konisch mit einer Einführungsschräge ausgebildet, also in der Figur 9 nach oben weiter werdend, und finden dadurch selbsttätig die richtige Position der Schale und des Bauteils in dem Bauraum. Die fünf dargestellten Stege 24 dienen als Kabeleinklemmschutz. Die Stege 24 führen in diesem Bereich liegende Kabel oder Kabelbäume derart, daß diese von dem Rand der Unterschale 16 ferngehalten werden und zum Beispiel nicht zwischen dem Rand der Unterschale 16 und einer Kante an der Aufnahme für die Unterschale, auf der die Unterschale 16 aufliegt, eingeklemmt werden können. Die Unterschale 16 gemäß Figur 9 hat noch folgende Besonderheit: Die Unterschale 16 wird in der Regel in eine schalenförmige Aufnahme eingesetzt, wobei die in Figur 9 sichtbare Fläche nach unten weist. Für diesen manuellen Einsetzvorgang oder Herausnahmevorgang oder die Justierung hat die Unterschale 16 zunächst kein Greifelement zum Halten der Schale. Die Schale enthält jetzt zwei Löcher 33, 34 zwischen denen ein Ring oder Halbring 35 angeformt ist. Dann wird ein nicht dargestelltes gürtelähnliches Teil durch das Loch 33, die durch den Ring oder Halbring 35 gebildete Öffnung und das Loch 34 hindurchgeführt und bildet somit an der Oberseite der Unterschale 16 eine Schlaufe als Greifelement zum manuellen Einsetzen, Herausziehen und Justieren der Unterschale 16 in einer Aufnahme. Der Ring 35 verhindert dabei, daß das gürtelähnliche Teil wie insbesondere ein Kabelbinder nach unten herausfällt. Mit dem nach oben herausragenden Teil des Kabelbinders in Form einer Schlaufe kann dann das gesamte Bauteil oder nur die Unterschale 16 manuell aus einer die Unterschale 16 aufnehmenden wannenförmigen Halterung herausgenommen, eingesetzt oder in dieser justiert werden.

Figur 10 zeigt den genannten Bolzen 12 mit dem aus Stahl bestehenden Gewindeschaft 13 und dem aus Messing bestehenden Fuß 14. Der Gewindeschaft 13 ist mittels einer Verzahnung 25 in den Fuß 14 eingepreßt. Der Fuß 14 enthält an seiner Unterseite eine Vielzahl, zum Beispiel 25, Zapfen 26, deren Unterseite jeweils auf Leiterzügen oder Stromschienen der Schaltungsplatine 11 aufliegt. Der über den Gewindezapfen 13 zugeführte Strom verteilt sich dadurch auf die mit dem Messingfuß 14 aus einem Teil bestehenden Zapfen 26. Jeder dieser Bolzen 12 führt also seine eigene Betriebsspannung oder Betriebsstrom, zum Beispiel positive Betriebsspannung, geschaltete positive Betriebsspannung, Energie vom Generator usw.. Diese Ströme werden dann über die Schaltungsplatine Bauteilen wie Sicherungen und Relais zugeführt.

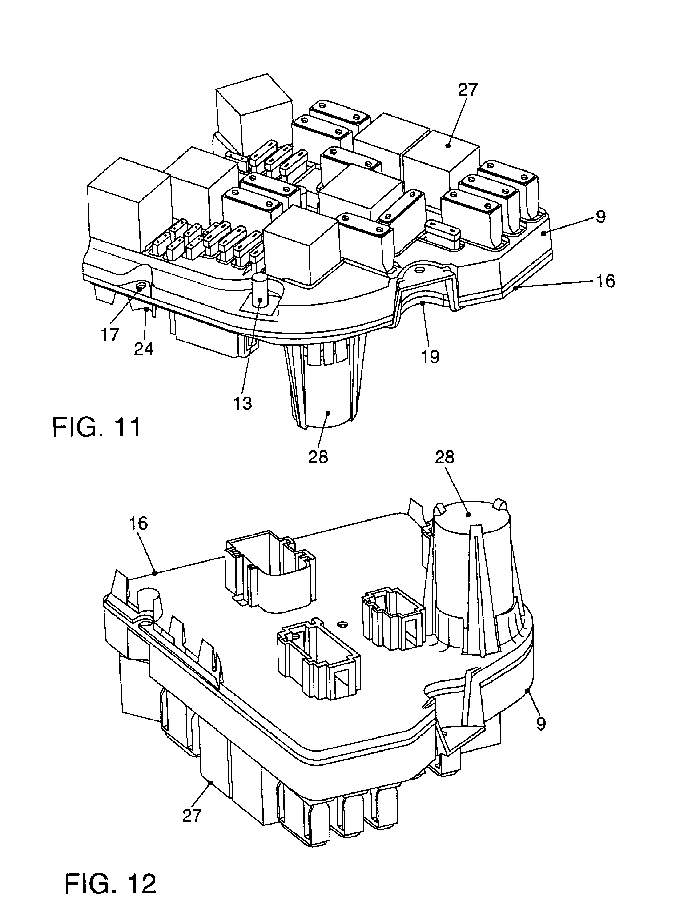

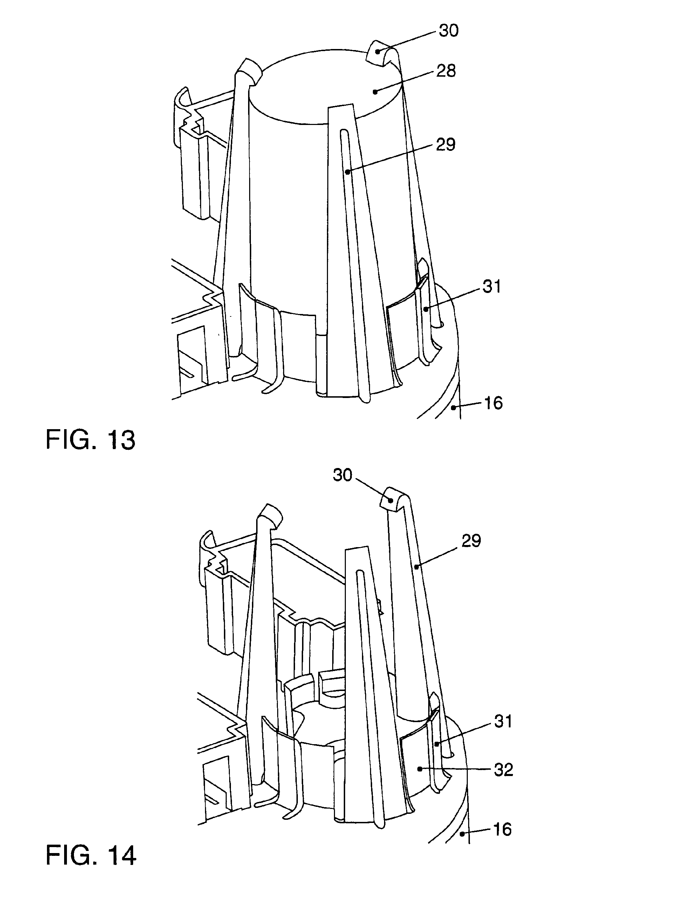

Figur 11 zeigt eine fertige Baueinheit, die durch den Zusammenbau der Einzelteile gemäß Figur 5 und Einstecken der Bauteile 27 entsteht. Zu erkennen sind die Oberschale 9, darauf angeordnete, in die Kontakte 10 eingesteckte Bauteile 27 wie insbesondere Relais und Sicherungen, die Unterschale 16, eine der Bohrungen 17, 18 zur Bildung der Befestigungsstelle, einer der Stege 24 für den Kabeleinklemmschutz und ein Gewindeschaft 13 für den Anschluß eines Stromzuführungskabels. Auf der Unterseite der Unterschale 16 ist ein großer Kondensator 28 befestigt, dessen Halterung anhand der Figuren 13 und 14 beschrieben wird.

Figur 12 zeigt die Anordnung von Figur 11 von unten.

Figur 13 zeigt die Art der Halterung des Kondensators 28 an der Unterseite der Unterschale 16. Die Unterschale 16 enthält drei über den Umfang des Kondensators 28 verteilte, radial federnde Arme 29, die mit hakenförmigen Enden 30 die Oberseite des Kondensators 28 umgreifen. An der Oberfläche der Unterschale 16 sind außerdem drei über den Umfang verteilte, radial federnde Federelemente 31 angeordnet, die je eine Kraft in Radialrichtung auf die Oberfläche des Kondensators 28 ausüben und dadurch Toleranzen im Durchmesser des Kondensators 28 ausgleichen. Außerdem üben die Federelemente 31 durch abgeschrägte Enden eine Kraft in Axialrichtung nach oben auf den Kondensator 28 aus und drücken diesen unter Ausgleich von Toleranzen stramm gegen die hakenförmigen Enden 30. Diese Art der sicheren, formschlüssigen Halterung des Kondensators 28 an der Unterschale 16 bewirkt somit einen einwandfreien Ausgleich auch von größeren Toleranzen in der Größenordnung von 1-2 mm des Durchmessers und der Länge des Kondensators 28. Diese stabile formschlüssige Halterung des Kondensators 25 an der Unterschale 16 ist wichtig, weil der Kondensator hängend angeordnet ist und sonst durch sein großes Eigengewicht leicht nach unten herausfallen könnte.

Figur 14 zeigt die Anordnung von Figur 13 ohne den eingesteckten Kondensator 28. Zusätzlich sind unterhalb des Kondensators noch starre Widerlager oder Anschläge 32 vorgesehen, die die Axialbewegung des Kondensators 28 beim Einstecken zwischen den Armen 29 bei radialer Auslenkung der Federelemente 31 begrenzen.

### BEZUGSZEICHENLISTE

- 1: Zentralelektronik
- 2: Gedruckte Leiterplatte
- 3: Motorsteuergerät
- 4: Motor
- 5: Datenbus
- 6: Datenbus
- 7: Leiterplatte
- 8: Instrumente
- 9: Oberschale
- 10: Kontakte
- 11: Schaltungsplatine
- 12: Bolzen
- 13: Gewindezapfen
- 14: Fuß
- 15: Öffnungen
- 16: Unterschale
- 17: Bohrung
- 18: Bohrung
- 19: Aussparung
- 20: Öffnungen
- 21: Bohrung
- 22: Kante
- 23: Bohrung
- 24: Führungsstege
- 25: Verzahnung
- 26: Zapfen
- 27: Bauteile
- 28: Kondensator
- 29: Arme
- 30: hakenförmige Enden
- 31: Federelemente
- 32: Anschläge
- 33: Loch
- 34: Loch
- 35: Ring

## Patentansprüche

1. Elektronische Steuervorrichtung für einen Motor in einem Kraftfahrzeug mit einer mehrere elektrisch betriebene Baugruppen steuernden Zentralelektronik und einem die Motorfunktionen steuernden Motorsteuergerät, die elektrisch miteinander verbunden sind, **dadurch gekennzeichnet, daß** die Zentralelektronik (1) und das Motorsteuergerät (3) über eine gedruckte Leiterplatte (2) miteinander verbunden sind oder daß das Motorsteuergerät (3) vollständig in die Zentralelektronik (1) integriert ist.

2. Steuervorrichtung nach Anspruch 1, **dadurch gekennzeichnet, daß** die Leiterplatte (2) beidseitig mit Leitern bedruckt ist.

3. Steuervorrichtung nach Anspruch 1, **dadurch gekennzeichnet, daß** die Leiterplatte (2) Leiterbrücken für eines oder beide der durch die Leiterplatte (2) miteinander verbundenen Bausteine (1, 3) enthält.

4. Steuervorrichtung nach Anspruch 1, **dadurch gekennzeichnet, daß** die gedruckte Leiterplatte (2) zusätzlich optische oder akustische Anzeigemittel (8) für Betriebsparameter des Fahrzeugs oder für Alarmfunktionen enthält.

5. Steuervorrichtung nach Anspruch 1, **dadurch gekennzeichnet, daß** optische oder akustische Anzeigemittel für Betriebsparameter des Fahrzeugs oder für Alarmfunktionen mit der Zentralelektronik (1) integriert sind.

6. Steuervorrichtung nach Anspruch 1, **dadurch gekennzeichnet, daß** die Leiterplatte (2) ein von der Zentralelektronik (1) und dem Motorsteuergerät (3) getrenntes und in diese Bausteine (1, 3) eingestecktes Bauteil ist.

7. Steuervorrichtung nach Anspruch 1, **dadurch gekennzeichnet, daß** das Motorsteuergerät (3) an dem Motorgehäuse gelagert und die Zentralelektronik (1) über die Leiterplatte (2) auf das Motorsteuergerät (3) aufgesetzt ist.

8. Steuervorrichtung nach Anspruch 1, **dadurch gekennzeichnet, daß** das Motorsteuergerät (3) und die übrigen Bauteile der Zentralelektronik (1) auf einer gemeinsamen Leiterplatte (7) angeordnet sind.

9. Steuervorrichtung nach Anspruch 1, **gekennzeichnet** durch die Anwendung bei Wasserfahrzeugen auf dem Marinebereich.

10. Baueinheit zur Verteilung von Betriebsspannungen von einem Zentralpunkt an verschiedene Verbraucher in einem Kraftfahrzeug, **dadurch gekennzeichnet, daß** eine Vielzahl von zur Aufnahme von Bauteilen (27) vorgesehenen Kontakten (10) durch Öffnungen einer Oberschale (9) hindurchgesteckt und diese Einheit als Ganzes in eine darunter angeordnete Schaltungsplatine (11) eingepreßt ist.

11. Baueinheit nach Anspruch 10, **dadurch gekennzeichnet, daß** unterhalb der Schaltungsplatine (11) eine Unterschale (16) angeordnet ist, auf deren Unterseite gegebenenfalls weitere Bauteile wie ein großer Kondensator (28) befestigt sind.

12. Baueinheit nach Anspruch 10, **dadurch gekennzeichnet, daß** zur Übertragung verschiedener Betriebsspannungen oder Betriebsströmen von Kabelanschlüssen an der Oberschale (9) zu der Schaltungsplatine (11) Bolzen (12) vorgesehen sind, die an einem Ende einen in eine Öffnung (15) der Oberschale (9) eingreifenden Gewindezapfen (13) und am anderen Ende einen gegenüber dem Gewinde größeren Fuß (14) aufweisen, der auf Leiterzügen der Schaltungsplatine (11) aufliegt.

13. Baueinheit nach Anspruch 12, **dadurch gekennzeichnet, daß** der Fuß (14) auf seiner Unterseite mit einer Vielzahl von getrennten, auf den Leiterzügen aufliegenden Zapfen (26) versehen ist.

14. Baueinheit nach Anspruch 12, **dadurch gekennzeichnet, daß** an die durch Öffnungen (15) in der Oberschale (9) hindurchragenden Gewindezapfen (13) Betriebsspannungen führende Leitungen jeweils mittels eines Kabelschuhs und einer Mutter angeschlossen sind.

15. Baueinheit nach Anspruch 12, **dadurch gekennzeichnet, daß** die Öffnungen (15) mit Kodierungen versehen sind, die nur das Aufsetzen des jeweils richtigen Kabelschuhs auf den Gewindezapfen (13) ermöglichen und eine Vertauschung der Kabelschuhe zwischen den Gewindezapfen (13) verhindern.

16. Baueinheit nach Anspruch 15, **dadurch gekennzeichnet, daß** die Kodierung durch unterschiedlich verlaufende Erhebungen oder Kanten (22) an der Oberschale (9) im Umgebungsbereich der Öffnungen (15) gebildet ist.

17. Baueinheit nach Anspruch 12, **dadurch gekennzeichnet, daß** der Gewindezapfen (13) aus Stahl besteht und in den aus Messing bestehenden Fuß (14) eingepreßt ist.

18. Baueinheit nach Anspruch 11, **dadurch gekennzeichnet, daß** die Unterschale (16) an ihrem Rand mit Bohrungen (23) zur Verschraubung der Baueinheit in einer Box, einem Bauraum oder einem sonstigen Umfeld versehen ist.

19. Baueinheit nach Anspruch 18, **dadurch gekennzeichnet, daß** die Bohrungen (23) mit Einführschrägen zur Erleichterung des Einsetzens in die richtige Position in dem Bauraum versehen sind.

20. Baueinheit nach Anspruch 11, **dadurch gekennzeichnet, daß** eine Schale (9, 16) zur Halterung eines größeren Bauteils (28) mit mehreren, über den Umfang des Bauteils verteilten, senkrecht zur Schalenebene gerichteten, radial zum Bauteil (28) federnden Armen (29) versehen ist, die mit hakenförmigen Enden (30) die Oberkante des Bauteils (28) umgreifen.

21. Baueinheit nach Anspruch 20, **dadurch gekennzeichnet, daß** im Bereich des Bauteils (28) an der Oberfläche der Schale (16) mehrere über den Umfang des Bauteils (28) verteilte, radial zum Bauteil (28) federnde Finger (31) vorgesehen sind, die zum Toleranzausgleich in Axialrichtung und in Radialrichtung des Bauteils (28) je auf das Bauteil (28) eine radiale Kraft und eine axiale Kraft ausüben, die das Bauteil (28) gegen die hakenförmigen Enden (30) der federnden Arme (29) drückt.

22. Baueinheit nach Anspruch 20, **dadurch gekennzeichnet, daß** an der Schale (16) mehrere, über den Umfang des Bauteils (28) verteilte starre Widerlager oder Anschläge (32) vorgesehen sind, die die Radialbewegung und die Axialbewegung des Bauteils (28) beim Einsetzen zwischen den federnden Armen (29) begrenzen.

23. Baueinheit nach Anspruch 11, **dadurch gekennzeichnet, daß** die Unterschale (16) zwei Löcher (33, 34) aufweist, durch die ein in sich schließbares, gürtelähnliches Teil hindurchgeführt ist, das von der Oberseite der Unterschale (16) als Greifelement zum manuellen Einsetzen, Positionieren und Herausziehen der Unterschale (16) in eine bzw. aus einer Aufnahme dient.

24. Baueinheit nach Anspruch 23, **dadurch gekennzeichnet, daß** das gürtelähnliche Teil durch einen handelsüblichen Kabelbinder gebildet ist.

25. Baueinheit nach Anspruch 23, **dadurch gekennzeichnet, daß** an der Unterseite der Unterschale (16) zwischen den beiden Löchern (33, 34) ein aus der Schalenebene hervorragender Ring oder Halbring (35) angeformt ist, der das gürtelähnliche Teil umgibt und ein Herunterfallen dieses Teils durch die Unterschale (16) verhindert.

26. Baueinheit nach Anspruch 11, **dadurch gekennzeichnet, daß** die Unterschale (16) am Rand mehrere beabstandete Führungsstege (24) aufweist, die Kabel vom Rand fernhalten und ein Einklemmen eines unterhalb der Unterschale (16) liegenden Kabels zwischen der Unterschale (16) und einer Kante einer die Unterschale (16) aufnehmneden Aufnahme verhindern.
